# EUROPÄISCHE PATENTSCHRIFT

(11) **EP 1 539 438 B1**
(45) Veröffentlichungstag und Bekanntmachung des Hinweises auf die Patenterteilung: **29.03.2006**
(21) Anmeldenummer: 03798106.5
(22) Anmeldetag: 19.08.2003
(51) Int. Cl.: B26B 19/28, B26B 19/04, H02K 33/04

(54) **ANTRIEBSEINRICHTUNG ZUM ERZEUGEN EINER OSZILLIERENDEN BEWEGUNG FÜR EIN ELEKTRISCHES KLEINGERÄT**
DRIVE DEVICE FOR THE GENERATION OF AN OSCILLATING MOVEMENT FOR A SMALL ELECTRICAL APPLIANCE
DISPOSITIF D'ENTRAINEMENT DESTINE A PRODUIRE UN MOUVEMENT OSCILLATOIRE POUR UN PETIT ELECTROMENAGER

(30) Priorität: 11.09.2002 DE 10242093
(43) Veröffentlichungstag der Anmeldung: 15.06.2005
(73) Patentinhaber: Braun GmbH, 61476 Kronberg (DE)
(72) Erfinder: RING, Martin, 61479 Glashütten (DE); BÖRGER, Georg, 61449 Steinbach (DE); SCHOBER, Uwe, 61479 Glashütten (DE)
(86) Internationale Anmeldenummer: PCT/EP2003/009149
(87) Internationale Veröffentlichungsnummer: WO 2004/028758

(56) Entgegenhaltungen:
- US-A- 3 296 468
- US-A- 3 863 338
- US-A- 5 921 134

## Beschreibung

Die Erfindung betrifft eine Antriebseinrichtung zum Erzeugen einer oszillierenden Bewegung wenigstens einer Arbeitseinheit eines elektrischen Kleingeräts gemäß dem Oberbegriff des Anspruchs 1. Weiterhin betrifft die Erfindung ein elektrisches Kleingerät, das über eine derartige Antriebseinheit verfügt. Bei dem Kleingerät kann es sich insbesondere um einen elektrischen Rasierer oder eine elektrische Zahnbürste handeln.

Aus der DE 1 151 307 A ist ein Schwingankerantrieb für Trockenrasiergeräte mit hin- und hergehender Arbeitsbewegung eines Schermessers bekannt. Der bekannte Schwingankerantrieb weist einen mit dem Gehäuse des Rasiergeräts fest verbundenen und U-förmig ausgebildeten Elektromagneten auf. In der Nähe der Pole des Elektromagneten sind ein Arbeitsanker und beiderseits des Arbeitsankers massensymmetrisch je ein schwingfähiger Ausgleichsanker angeordnet. Der Arbeitsanker und die Ausgleichsanker sind jeweils mittels einer U-förmigen Blattfeder beweglich aufgehängt. Im Betriebszustand schwingt der Arbeitsanker, der das Schermesser antreibt, parallel zu den Polflächen des feststehenden Elektromagneten, wobei die Ausgleichsanker eine dazu gegenphasige Schwingbewegung ausführen, um eine Übertragung der Schwingungen des Arbeitsankers auf das Gehäuse des Rasiergeräts möglichst zu verhindern.

Die DE 196 80 506 T1 offenbart einen elektrischen Rasierapparat mit einem oszillierenden Linearmotor, der einen stationären Elektromagneten und mehrere bewegliche Komponenten aufweist, die mit Hilfe des Elektromagneten in zueinander gegenphasige Schwingungsbewegungen versetzt werden. Der Elektromagnet ist fest mit dem Chassis des Rasierapparats verschraubt. Die beweglichen Komponenten sind über eine Blattfeder beweglich am Chassis aufgehängt. Die Blattfeder ist mehrfach geschlitzt, so daß sich die beweglichen Komponenten in zueinander entgegengesetzte Richtungen bewegen können. Zur Erhaltung der Gegenphasigkeit zwischen den beweglichen Komponenten sind diese über einen Lenker miteinander verbunden, der drehbar an einer festen Achse gelagert ist.

Aus der DE 197 81 664 C2 ist ein elektrischer Rasierer mit einem Linearantrieb bekannt, der einen hohlzylindrisch ausgebildeten Stator mit einer elektromagnetischen Spule aufweist. Im Stator sind zwei bewegliche Elemente angeordnet, die gegenphasig zueinander angetrieben werden und von denen eines ein Schermesser antreibt und das andere zur Unterdrückung unerwünschter Vibrationen ein Gegengewicht aufweisen kann. Die beiden beweglichen Elemente sind mit einem Federelement verbunden, das am Stator befestigt ist.

Der Erfindung liegt die Aufgabe zugrunde, eine Antriebseinrichtung für ein elektrisches Kleingerät anzugeben, mit der sich auf möglichst optimale Weise oszillierende Bewegungen erzeugen lassen und unerwünschte Gerätevibrationen möglichst vermieden werden.

Diese Aufgabe wird durch die Merkmalskombination des Anspruchs 1 gelöst.

Die erfindungsgemäße Antriebseinrichtung zum Erzeugen einer oszillierenden Bewegung wenigstens einer Arbeitseinheit eines elektrischen Kleingeräts weist eine Spule zur Ausbildung eines Magnetfelds auf, das von einer ersten Antriebskomponente ausgeht und auf eine zweite Antriebskomponente, die beweglich im elektrischen Kleingerät angeordnet ist, derart einwirkt, daß die zweite Antriebskomponente in eine oszillierende Bewegung versetzt wird. Die erste Antriebskomponente ist zur Ausführung einer zur zweiten Antriebskomponente gegenphasig oszillierenden Bewegung beweglich im elektrischen Kleingerät angeordnet. Die Antriebseinrichtung weist weiterhin ein Koppelelement auf, durch das in einer Richtung parallel zur Bewegungsrichtung der beiden Antriebskomponenten eine starre Kopplung und in einer dazu senkrechten Richtung eine elastische Kopplung zwischen den beiden Antriebskomponenten ausgebildet wird.

Dadurch, daß die zwei Antriebskomponenten gegenphasig zueinander schwingen wird eine wesentlich höhere Relativgeschwindigkeit zwischen den Antriebskomponenten erzielt als bei einem herkömmlichen Antrieb, bei dem sich nur eine Antriebskomponente bewegt und die andere Antriebskomponente ruht. Da der Wirkungsgrad bei derartigen Antrieben mit der Relativgeschwindigkeit der Antriebskomponenten zueinander zunimmt, lassen sich mit der erfindungsgemäßen Antriebseinrichtung höhere Wirkungsgrade erreichen als mit vergleichbaren bekannten Antrieben. Die erfindungsgemäße Ausbildung des Koppelelements hat den Vorteil, daß zum einen eine exakte Einhaltung der Gegenphasigkeit und eines vorgebbaren Verhältnisses der Schwingungsamplituden der beiden Antriebskomponenten sichergestellt wird. Zum anderen wird durch die elastische Kopplung quer zur Bewegungsrichtung der beiden Antriebskomponenten zudem die Anlenkung des Koppelelements an den Antriebskomponenten vereinfacht, da keinerlei Spiel erforderlich ist. Da eine spielbehaftete Befestigung eine Reihe von Nachteilen aufweist, wird im Rahmen der Erfindung von der Möglichkeit zur spielfreien Befestigung des Koppelelements an den beiden Antriebskomponenten in der Regel tatsächlich Gebrauch gemacht. Dies hat den Vorteil, daß die Befestigung kostengünstig und kompakt ausgeführt werden kann und keinem Verschleiß unterliegt. Als weiterer Vorteil kommt noch hinzu, daß es im Gegensatz zu einer Befestigung mit Spiel nicht zu einer Geräuschentwicklung kommt.

In einem bevorzugten Ausführungsbeispiel weist das Koppelelement ein starres Element und ein erstes Federelement auf. Das erste Federelement kann dabei am starren Element und an einer der beiden Antriebskomponenten befestigt sein. Weiterhin weist das Koppelelement in der Regel ein zweites Federelement auf, das am starren Element und an der anderen Antriebskomponente befestigt ist. Schließlich kann das Koppelelement noch ein drittes Federelement aufweisen, das am starren Element und an einem Gestell befestigt ist. Das erste Federelement und/oder das zweite Federelement und/oder das dritte Federelement können in einer Richtung parallel zur Bewegungsrichtung der beiden Antriebskomponenten starr und in einer dazu senkrechten Richtung elastisch ausgebildet sein. Das starre Element weist bevorzugt zwei Einzelbauteile auf, die nebeneinander angeordnet sind, wobei zwischen den Einzelbauteilen das dritte Federelement befestigt ist und an den beiden freien Enden der Einzelbauteile das erste Federelement und das zweite Federelement befestigt sind. Dabei sind die Einzelbauteile insbesondere U-förmig ausgebildet. Auf die vorstehend beschriebene Art läßt sich das Koppelelement sehr einfach und kostengünstig realisieren. Zudem ist die Befestigung des Koppelelements an den beiden Antriebskomponenten problemlos realisierbar, da hierbei keine engen Toleranzen eingehalten werden müssen und es sich jeweils um eine starre Verbindung handelt.

Das Koppelelement kann schwenkbar aufgehängt sein, um die für die gegenphasige Bewegung der beiden Antriebskomponenten erforderliche Bewegungsrichtungsumkehr zu vollziehen. Die Schwenkachse ist dabei insbesondere senkrecht zur Bewegungsrichtung der beiden Antriebskomponenten orientiert. Wenn eine Bewegung der beiden Antriebskomponenten mit gleicher Schwingungsamplitude gewünscht ist, kann die Schwenkachse mittig zwischen der Befestigung des Koppelelements an der ersten Antriebskomponente und der Befestigung des Koppelelements an der zweiten Antriebskomponente angeordnet sein. Dabei ist es von Vorteil, wenn die Aufhängung des Koppelelements spielfrei ausgebildet ist, da sich dadurch eine hohe Präzision erzielen läßt und keine Verschleiß- oder Geräuschprobleme auftreten. Hierzu kann an dem Gestell und am Koppelelement ein viertes Federelement befestigt sein. Das vierte Federelement ist bevorzugt in einer Richtung parallel zur Bewegungsrichtung der beiden Antriebskomponenten elastisch und in einer dazu senkrechten Richtung starr ausgebildet und dient zusammen mit dem dritten Federelement der schwenkbaren Aufhängung des Koppelelements am Gestell. Jede Schwenkbewegung des Koppelelements geht somit lediglich mit einem geringfügigen elastischen Nachgeben des dritten und vierten Federelements einher, so daß eine Lagerstelle mit zueinander drehbeweglichen Teilen vermieden werden kann. Dadurch ergeben sich die bereits angesprochenen Vorteile beim Verschleiß und bei der Geräuschentwicklung und weiterhin eine Unempfindlichkeit gegen Feuchtigkeit.

Die beiden Antriebskomponenten können über wenigstens ein fünftes Federelement, das in einer Richtung parallel zur Bewegungsrichtung der beiden Antriebskomponenten elastisch ausgebildet ist, miteinander verbunden sein. Dies hat den Vorteil, daß eine weitgehend reibungsfreie Relativbewegung zwischen den beiden Antriebskomponenten ermöglicht wird. Gleichzeitig werden dadurch auch die für den Betrieb der Antriebseinrichtung benötigten Rückstellkräfte erzeugt. Insbesondere können mehrere fünfte Federelemente stapelförmig übereinander angeordnet sein, so daß sich auf diese Weise sehr hohe Federkonstanten realisieren lassen, die sich zudem noch sehr einfach über die Anzahl der verwendeten Federelemente variieren lassen. Entsprechend einfach kann damit auch die Resonanzfrequenz der Antriebseinrichtung auf eine gewünschten Wert eingestellt werden.

Zur Befestigung am elektrischen Kleingerät weist die Antriebseinrichtung bevorzugt wenigstens ein sechstes Federelement auf, das in einer Richtung parallel zur Bewegungsrichtung der beiden Antriebskomponenten elastisch ausgebildet ist. Damit läßt sich eine reibungsfreie Aufhängung der Antriebseinrichtung im elektrischen Gerät realisieren, die zudem den Vorteil aufweist, daß sie das elektrische Gerät schwingungsmäßig weitgehend von der Antriebseinrichtung entkoppelt.

Das erste Federelement, das zweite Federelement, das dritte Federelement, das vierte Federelement, das fünfte Federelement und/oder das sechste Federelement können jeweils als Blattfeder ausgebildet sein. Eine Blattfeder ist nur bzgl. einer Raumrichtung elastisch nachgiebig ausgebildet. Bzgl. der beiden anderen Raumrichtungen verhält sie sich wie ein starrer Körper und kann somit in diesen Raumrichtungen zusätzlich statische Funktionen übernehmen. Weitere Vorteile der Blattfeder bestehen darin, daß sie extrem wenig Bauraum beansprucht und kostengünstig verfügbar ist.

Wenigstens eine der beiden Antriebskomponenten kann einen oder mehrere Dauermagnete aufweisen. Weiterhin kann wenigstens eine der beiden Antriebskomponenten einen Wickelkem aufweisen, auf dem die Spule angeordnet ist. Damit läßt sich bei relativ geringen Abmessungen ein leistungsstarker Antrieb realisieren, dessen Stromaufnahme ausreichend gering ist, um beispielsweise einen Akku-Betrieb des elektrischen Kleingeräts zuzulassen

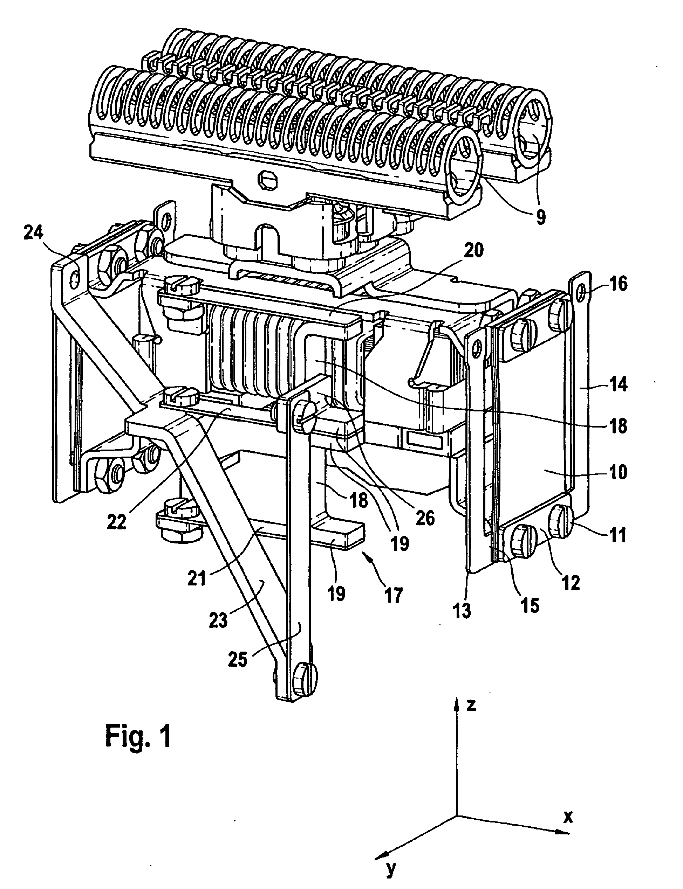

Die Antriebseinrichtung ist bevorzugt so ausgebildet, daß sich im Betriebszustand die Schwerpunkte der ersten Antriebskomponente inklusive sich mitbewegender Bauteile und der zweiten Antriebskomponente inklusive sich mitbewegender Bauteile auf einer gemeinsamen Linie, insbesondere einer Geraden, bewegen. Dabei ist es von besonderem Vorteil, wenn diese Linie bzw. Gerade in der gemeinsamen Bewegungsebene der beiden Antriebskomponenten (x-z Ebene gemäß Fig. 1) liegt.

Ferner ist es von Vorteil, wenn die Schwenkachse des Koppelelements diese Linie bzw. Gerade kreuzt. Des weiteren kann die Antriebseinrichtung so ausgebildet sein, daß im Betriebszustand die linearen Impulse der ersten Antriebskomponente inklusive sich mitbewegender Bauteile und der zweiten Antriebskomponente inklusive sich mitbewegender Bauteile entgegengesetzt gleich sind. Durch diese Maßnahmen kann erreicht werden, daß beim Betrieb der Antriebseinrichtung weder ein resultierender Drehimpuls noch ein resultierender linearer Impuls erzeugt wird. Dies hat den Vorteil daß keine oder nahezu keine Vibrationen auf das elektrische Kleingerät übertragen werden, bei dem die erfindungsgemäße Antriebseinrichtung eingesetzt wird.

Beim erfindungsgemäßen Kleingerät kann das Gestell fest mit dem Kleingerät verbunden sein, so daß sich alle am Gestell angebrachten Bauteile auf das Kleingerät abstützen können. Um dauerhaft einen zuverlässigen Betrieb zu gewährleisten und manuelle Einstellarbeiten zu vermeiden, weist das erfindungsgemäße Kleingerät vorzugsweise eine selbstlernende Elektronik zur Ansteuerung der Antriebseinheit unter Resonanzbedingungen auf.

Die Erfindung wird nachstehend an Hand des in der Zeichnung dargestellten Ausführungsbeispiels erläutert, das sich auf eine Antriebseinrichtung für einen elektrischen Rasierer bezieht. Die Erfindung eignet sich aber auch für andere elektrische Kleingeräte wie beispielsweise eine elektrische Zahnbürste.

Es zeigen
- Fig. 1: ein Ausführungsbeispiel der erfindungsgemäßen Antriebseinrichtung in perspektivischer Darstellung,
- Fig. 2: die erste Motorkomponente des in Fig. 1 dargestellten Ausführungsbeispiels in perspektivischer Darstellung und
- Fig. 3: die zweite Motorkomponente des in Fig. 1 dargestellten Ausführungsbeispiels in perspektivischer Darstellung.

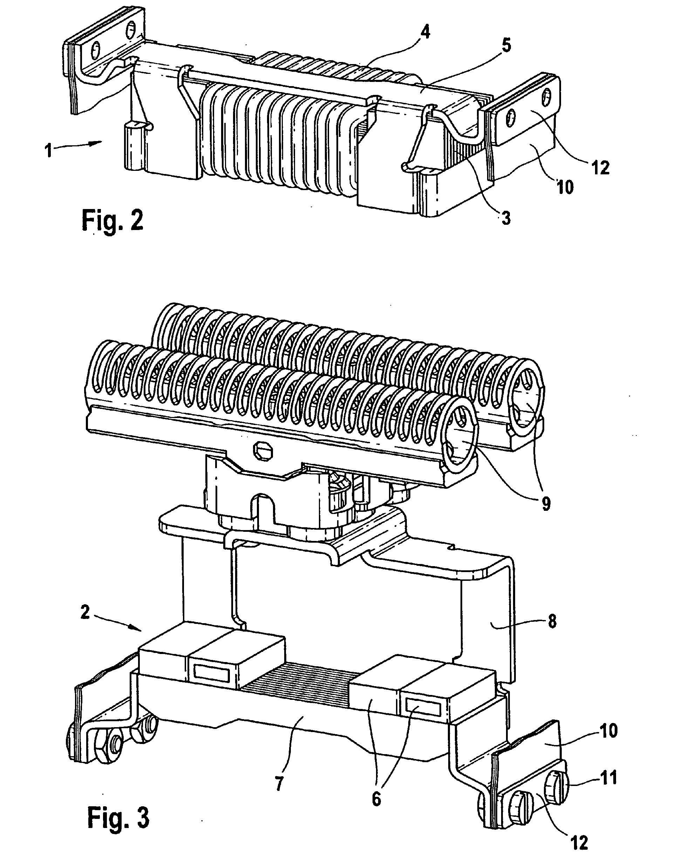

Fig. 1 zeigt ein Ausführungsbeispiel der erfindungsgemäßen Antriebseinrichtung in perspektivischer Darstellung. Die erfindungsgemäße Antriebseinrichtung ist als ein oszillierender Linearmotor ausgebildet, der zwei bewegliche Motorkomponenten 1 und 2 aufweist. Die beiden Motorkomponenten 1 und 2 sind in einem geringen Abstand zueinander angeordnet. Um die Zuordnung der Einzelteile zu den beiden Motorkomponenten 1 und 2 zu erleichtern, sind die Motorkomponenten 1 und 2 jeweils nochmals separat dargestellt, und zwar die erste Motorkomponente 1 in Fig. 2 und die zweite Motorkomponente 2 in Fig. 3. Die Art der Darstellung entspricht dabei jeweils der Fig. 1.

Die in Fig. 2 dargestellte erste Motorkomponente 1 besteht aus einem Eisenkern 3 und einer aus Draht gewickelten Spule 4, die auf dem Eisenkern 3 angeordnet ist. Am Eisenkern 3 ist ein erster Halterahmen 5 angebracht, der der Befestigung weiterer Bauteile dient. Die in Fig. 3 dargestellte zweite Motorkomponente 2 weist vier Dauermagnete 6 auf, die jeweils paarweise auf einer gemeinsamen Trägerplatte 7 angeordnet sind. Dabei sind je zwei Dauermagnete 6 nebeneinander mit antiparallel orientierter Polung auf der Trägerplatte 7 befestigt. Die Trägerplatte 7 ist stabförmig ausgebildet und ebenso wie der Eisenkern 3 aus einem Eisenwerkstoff oder einem anderen ferromagnetischen Material gefertigt. An der Trägerplatte 7 ist ein zweiter Halterahmen 8 angebracht, der analog zum ersten Halterahmen 5 der ersten Motorkomponente 1 der Befestigung weiterer Bauteile dient. Am zweiten Halterahmen 8 sind zwei als Schermesser 9 ausgebildete Untermesser montiert, die mit dem Linearmotor angetrieben werden, und mit nicht dargestellten beispielsweise als Scherfolien ausgebildeten Obermessern zusammenwirken. Weiterhin sind jeweils seitlich an den beiden Motorkomponenten 1 und 2 am ersten Halterahmen 5 und am zweiten Halterahmen 8 zwei Resonanzfedem 10 mittels Schrauben 11 und Halteplättchen 12 angeschraubt. Beim dargestellten Ausführungsbeispiel sind die Resonanzfedern 10 als Pakete aus mehreren übereinandergestapelten Blattfedern ausgebildet, die jeweils als dünne, rechteckige Platten geformt sind. Diese Platten verhalten sich innerhalb der von ihnen aufgespannten Ebene wie starre Körper und geben senkrecht zu dieser Ebene federnd nach.

Durch die Resonanzfedern 10 werden die erste Motorkomponente 1 und die zweite Motorkomponente 2 auf einem definierten Abstand zueinander gehalten, der so gewählt ist, daß zwischen den Dauermagneten 6 und dem Eisenkern 3 ein kleiner Luftspalt verbleibt. Da die Resonanzfedem 10 senkrecht zu ihren Hauptflächen eine Federwirkung aufweisen, verfügen die beiden Motorkomponenten 1 und 2 trotz der Fixierung durch die Resonanzfedern 10 in dieser Richtung über eine gewisse Beweglichkeit, so daß durch die beiden Motorkomponenten 1 und 2 und die Resonanzfedem 10 ein schwingungsfähiges System ausgebildet wird. Mit anderen Worten, die erste Motorkomponente 1 und die zweite Motorkomponente 2 können jeweils eine lineare Schwingungsbewegung ausführen, wenn sie durch die Einwirkung einer Kraft unter Überwindung der Rückstellkräfte der Resonanzfedem 10 aus ihrer Ruheposition ausgelenkt werden. Zur Erzeugung dieser Schwingungsbewegungen wird ein Stromfluß durch die Spule 4 hergestellt. Die Spule 4 wirkt als Elektromagnet und erzeugt unterstützt durch den Eisenkern 3 ein Magnetfeld, das auf die Dauermagnete 6 einwirkt und eine Relativbewegung zwischen der Spule 4 und den Dauermagneten 6 zur Folge hat. In der Darstellung der Fig. 1 bedeutet dies, daß von den beiden Motorkomponente 1 und 2 die eine nach links und die andere nach rechts jeweils entlang der x-Achse ausgelenkt wird. Die x-Achse gemäß Fig. 1 stellt somit die Horizontale und die z-Achse die Vertikale dar.

Durch entsprechende Ansteuerung der Spule 4 kann das damit erzeugte Magnetfeld jeweils umgepolt werden, so daß die erste und die zweite Motorkomponente 1 und 2 abwechselnd in die eine und dann wieder in die andere Richtung ausgelenkt werden und letztendlich in zueinander gegenphasige Schwingungen versetzt werden. Dabei besteht ein wesentlicher Aspekt der Erfindung darin, daß sich sowohl die erste Motorkomponente 1 als auch die zweite Motorkomponente 2 bewegt, d. h., daß der erfindungsgemäße Linearmotor keinen Stator aufweist, mit dessen Hilfe ein Läufer angetrieben wird, sondern zwei gegeneinander schwingende Motorkomponenten 1 und 2, die sich gegenseitig antreiben. Eine dieser Motorkomponenten 1 oder 2 entspricht dem Läufer eines herkömmlichen Linearmotors. Die andere übernimmt die Funktionen des Stators eines herkömmlichen Linearmotors, ist aber im Gegensatz zu diesem nicht statisch, sondern bewegt sich ebenfalls. Dies führt unter anderem auch dazu, daß sich unter sonst gleichen Bedingungen die erste und zweite Motorkomponente 1 und 2 des erfindungsgemäßen Linearmotors mit einer Relativgeschwindigkeit zueinander bewegen, die doppelt so hoch wie die Relativgeschwindigkeit zwischen einem Stator und einem Läufer eines herkömmlichen Linearmotors ist. Dadurch läßt sich beim erfindungsgemäßen Linearmotor ein relativ hoher Wirkungsgrad erzielen.

Die Frequenz der Schwingungsbewegungen der beiden Motorkomponenten 1 und 2 wird über die Ansteuerung der Spule 4 vorgegeben und insbesondere so eingestellt, daß sie der Resonanzfrequenz des Schwingungssystems entspricht, das durch die beiden Motorkomponenten 1 und 2 und die Resonanzfedem 10 gebildet wird. Dies kann mittels einer selbstlernenden Elektronik geschehen, mit der die Spule 4 angesteuert wird, wobei die Schwingungsamplitude über eine Pulsweitenmodulation geregelt werden kann. Unter Resonanzbedingungen ergibt sich ein sehr robustes Schwingungsverhalten und es ist lediglich eine vergleichsweise geringe Energiezufuhr erforderlich.

Der erfindungsgemäße Linearmotor ist konstruktiv so ausgelegt, daß möglichst keine Schwingungen auf den Rasierer übertragen werden. Um dies zu erreichen, ist es erforderlich, daß sowohl der aus der Bewegung der Motorkomponenten 1 und 2 resultierende Drehimpuls als auch der resultierende lineare Impuls möglichst zu Null wird. Der resultierende Drehimpuls ist dann Null, wenn sich der Schwerpunkt der ersten Motorkomponente 1 inklusive sich mitbewegender Bauteile und der Schwerpunkt der zweiten Motorkomponente 2 inklusive sich mitbewegender Bauteile auf einer gemeinsamen Geraden bewegen. Dies wird bei dem in den Fig. 1 bis 3 dargestellten Ausführungsbeispiel dadurch erreicht, daß die erste Motorkomponente 1 sehr kompakt ausgebildet ist und von der etwas ausgedehnteren zweiten Motorkomponente 2 umschlossen wird, wobei die Massenverteilungen der zweiten Motorkomponente 2 an gegenüberliegenden Seiten der ersten Motorkomponente 1 jeweils aufeinander abgestimmt sind. Bei der Abstimmung der Massenverteilungen werden beispielsweise auch die Schermesser 9 berücksichtigt. Damit der resultierende lineare Impuls zu Null wird, müssen der lineare Impuls der ersten Motorkomponente 1 inklusive sich mitbewegender Bauteile und der lineare Impuls der zweiten Motorkomponente 2 inklusive sich mitbewegender Bauteile entgegengesetzt gleich sein. Dies ist bei gleicher Schwingungsamplitude und -frequenz dann erfüllt, wenn die Massen jeweils unter Berücksichtigung der sich mitbewenden Bauteile gleich sind. Somit sind bei der ersten und zweiten Motorkomponente 1 und 2 nicht nur die Verteilung der Massen, sondern auch jeweils die Zahlenwerte für die Gesamtmassen aufeinander abzustimmen.

Zusätzlich zu jeder Resonanzfeder 10 ist mit den Schrauben 11 und den Halteplättchen 12 jeweils eine Haltefeder 13 am ersten Halterahmen 5 und am zweiten Halterahmen 8 befestigt. Die Haltefedern 13 sind ebenfalls als Blattfedern ausgebildet und weisen die Form von dünnen Platten auf, die an zwei gegenüberliegenden Seiten partiell geschlitzt sind, so daß jede Haltefeder 13 zwei Streifen 14 aufweist, die durch schmale Stege 15 mit dem restlichen Federkörper verbunden sind. Jeder Streifen 14 weist an seinem losen Ende eine Lochung 16 auf, die der Befestigung am Rasierer dient. Somit kann der erfindungsgemäße Linearmotor über die Haltefedern 13 in Bewegungsrichtung der beiden Motorkomponenten 1 und 2 federnd nachgiebig am Rasierer aufgehängt werden. Diese Art der Aufhängung ermöglicht eine weitgehende schwingungsmäßige Entkopplung des Rasierers vom Linearmotor.

Einen weiteren, im Rahmen der Erfindung wesentlichen Bestandteil des Linearmotors stellt ein Koppelelement 17 dar, das die beiden Motorkomponenten 1 und 2 mechanisch miteinander koppelt. Diese Kopplung geht über die durch die Resonanzfedem 10 bewirkte Kopplung insofern hinaus, als sie parallel zur Bewegungsrichtung der beiden Motorkomponenten 1 und 2 absolut starr ist und somit deren Bewegungen präzise und dauerhaft zueinander synchronisiert. Die Synchronisierung bleibt auch dann vollständig erhalten, wenn die beiden Motorkomponenten 1 und 2 unterschiedlichen Belastungen ausgesetzt sind und ist so ausgebildet, daß die beiden Motorkomponenten 1 und 2 exakt gegenphasig zueinander schwingen. Wie im folgenden noch näher erläutert wird, bewirkt das Koppelelement 17 in einer Richtung senkrecht zur Bewegungsrichtung der Motorkomponenten 1 und 2 keine starre, sondern eine elastische Kopplung.

Das Koppelelement 17 weist zwei U-förmig ausgebildete Streben 18 auf, die senkrecht zur Bewegungsrichtung der beiden Motorkomponenten 1 und 2 derart nebeneinander angeordnet sind, daß die Außenseiten je eines Schenkels 19 der beiden Streben 18 einander benachbart sind. An den beiden anderen Schenkeln 19 sind ein erstes Federelement 20 und ein zweites Federelement 21 befestigt, die jeweils als streifenförmige Blattfeder ausgebildet sind und sich in einer Richtung parallel zur Bewegungsrichtung der beiden Motorkomponenten 1 und 2 erstrecken. Das erste Federelement 20 ist mit seinem freien Ende and den ersten Halterahmen 5 angeschraubt. Das zweite Federelement 21 ist mit seinem freien Ende am zweiten Halterahmen 8 angeschraubt. Zwischen den beiden benachbarten Schenkeln 19 der Streben 18 ist ein drittes Federelement 22 angebracht, wobei die Befestigung, ebenso wie beim ersten Federelement 20 und beim zweiten Federelement 21, bevorzugt durch Schweißen erfolgt. Auch das dritte Federelement 22 ist als streifenförmige Blattfeder ausgebildet und parallel zum ersten Federelement 20 und zum zweiten Federelement 21 orientiert. Mit seinem freien Ende ist das dritte Federelement 22 an ein Gestell 23 angeschraubt, das eine Bohrung 24 zur Befestigung am Rasierer aufweist. An dem Gestell 23 ist ein viertes Federelement 25 angeschraubt, das entsprechend dem ersten, zweiten und dritten Federelement 20, 21 und 22 ausgebildet ist, jedoch im Gegensatz zu diesen mit seiner Längserstreckung in einer Richtung senkrecht zur Bewegungsrichtung der beiden Motorkomponenten 1 und 2 orientiert ist. Das andere Ende des vierten Federelements 25 ist in der Nähe der einander benachbarten Schenkel 19 an einer der Streben 18 befestigt. Die Befestigung erfolgt über eine Schraubverbindung an einer Halterung 26, die an eine der Streben 18 angeschweißt ist.

Die Funktionsweise des Koppelelements 17 stellt sich im einzelnen folgendermaßen dar:

Durch die Befestigung am ersten und zweiten Halterahmen 5 und 8 über das erste und zweite Federelement 20 und 21 verhält sich das Koppelelement 17 in einer Richtung parallel zur Bewegungsrichtung der beiden Motorkomponenten 1 und 2 starr und in einer dazu senkrechten Richtung elastisch. Dadurch wird zum einen das bereits angesprochene präzise Einfrieren der Phasenbeziehung zwischen den beiden Motorkomponenten 1 und 2 möglich. Zum anderen kann durch die Elastizität die mit der Bewegung der beiden Motorkomponenten 1 und 2 senkrecht zur Bewegungsrichtung variierende Erstreckung der Streben 18 kompensiert werden. Gemäß der Darstellung in Fig. 1 führen die Streben18 beim Betrieb des Linearmotors abwechselnd Kippbewegungen nach rechts und nach links aus, so daß sich deren Erstreckung in vertikaler Richtung fortwährend ändert.

Damit über das Koppelelement 17 die bereits erwähnte präzise Gegenphasigkeit zwischen den beiden Motorkomponenten 1 und 2 hergestellt werden kann, muß für die Kippbewegung des Koppelelements 17 eine Schwenkachse möglichst exakt definiert werden. Hierzu werden die Streben 18 an einer Stelle durch das dritte Federelement 22 parallel zur Bewegungsrichtung der Motorkomponenten 1 und 2 und durch das vierte Federelement 25 senkrecht dazu fixiert. Die so fixierte Stelle bildet die Schwenkachse für die Kippbewegung des Koppelelements 17 und ist gemäß Fig. 1 mittig in der Längserstreckung des aus den beiden Streben 18 bestehenden Gebildes angeordnet. Eine mittige Anordnung der Schwenkachse hat zur Folge, daß die beiden Motorkomponenten 1 und 2 mit gleicher Amplitude schwingen. Werden unterschiedliche Schwingungsamplituden und damit auch unterschiedliche Geschwindigkeitsbeträge der beiden Motorkomponenten 1 und 2 gewünscht, so wird statt dessen eine außermittige Anordnung der Schwenkachse gewählt. Das in Fig. 1 dargestellte Ausführungsbeispiel weist als eine weitere Besonderheit auf, daß die Schwenkachse die Gerade kreuzt, auf der sich die Schwerpunkte der beiden Motorkomponenten 1 und 2 inklusive der damit angetriebenen Schermesser 9 bewegen. Dies führt dazu, daß praktisch keine unerwünschten Vibrationen auf den Rasierer übertragen werden.

Das in Fig. 1 dargestellte Ausführungsbeispiel zeichnet sich weiterhin dadurch aus, daß sämtliche Verbindungen spielfrei ausgeführt sind, wobei die miteinander verbundenen Einzelteile am Ort der Verbindung starr aneinander befestigt sind. Eine gegebenenfalls benötigte Bewegungsfreiheit zwischen den verbundenen Einzelteilen wird dabei jeweils durch die Verwendung von Blattfedern bzw. von Blattfederanordnungen erzielt, mit denen sich auf die vorstehend beschriebene Art und Weise sogar eine schwenkbare Anlenkung realisieren läßt. Aus dieser Vorgehensweise resultieren eine hohe Präzision, eine sehr geringe Reibung, ein sehr geringer Verschleiß und ein sehr geräuscharmer Lauf des erfindungsgemäßen Linearmotors.

Die beim erfindungsgemäßen Linearmotor eingesetzten Trägerteile, wie beispielsweise der erste Halterahmen 5, der zweite Halterahmen 8, die Halteplättchen 12, die Streben 18, das Gestell 23 und die Halterung 26 können kostengünstig aus Stanz-Biege-Blechteilen gefertigt sein.

Zum Zusammenbau des erfindungsgemäßen Linearmotors werden für jedes einzelne Exemplar die Einzelteile bzw. Baugruppen, die zueinander eine genau definierte Position und/oder Orientierung einnehmen müssen, präzise zueinander ausgerichtet und in diesem ausgerichteten Zustand fixiert.

## Patentansprüche

1. Antriebseinrichtung zum Erzeugen einer oszillierenden Bewegung wenigstens einer Arbeitseinheit (9) eines elektrischen Kleingeräts mit einer Spule (4) zur Ausbildung eines Magnetfelds, das von einer ersten Antriebskomponente (1) ausgeht und auf eine zweite Antriebskomponente (2), die beweglich im elektrischen Kleingerät angeordnet ist, derart einwirkt, daß die zweite Antriebskomponente (2) in eine oszillierende Bewegung versetzt wird, wobei die erste Antriebskomponente (1) zur Ausführung einer zur zweiten Antriebskomponente (2) gegenphasig oszillierenden Bewegung beweglich im elektrischen Kleingerät angeordnet ist **dadurch gekennzeichnet, daß** die Antriebseinrichtung ein Koppelelement (17) aufweist, durch das in einer Richtung parallel zur Bewegungsrichtung der beiden Antriebskomponenten (1, 2) eine starre Kopplung und in einer dazu senkrechten Richtung eine elastische Kopplung zwischen den beiden Antriebskomponenten (1, 2) ausgebildet wird.

2. Antriebseinrichtung nach Anspruch 1, **dadurch gekennzeichnet, daß** das Koppelelement (17) spielfrei an den beiden Antriebskomponenten (1, 2) befestigt ist.

3. Antriebseinrichtung nach einem der vorhergehenden Ansprüche, **dadurch gekennzeichnet, daß** das Koppelelement (17) ein starres Element (18) und ein erstes Federelement (20) aufweist.

4. Antriebseinrichtung nach Anspruch 3, **dadurch gekennzeichnet, daß** das erste Federelement (20) am starren Element (18) und an einer der beiden Antriebskomponenten (1, 2) befestigt ist.

5. Antriebseinrichtung nach Anspruch 4, **dadurch gekennzeichnet, daß** das Koppelelement (17) ein zweites Federelement (21) aufweist, das am starren Element (18) und an der anderen Antriebskomponente (1, 2) befestigt ist.

6. Antriebseinrichtung nach einem der Ansprüche 3 bis 5, **dadurch gekennzeichnet, daß** das Koppelelement (17) ein drittes Federelement (22) aufweist, das am starren Element (18) und an einem Gestell (23) befestigt ist.

7. Antriebseinrichtung nach einem der Ansprüche 3 bis 6, **dadurch gekennzeichnet, daß** das erste Federelement (20) und/oder das zweite Federelement (21) und/oder das dritte Federelement (22) in einer Richtung parallel zur Bewegungsrichtung der beiden Antriebskomponenten (1, 2) starr und in einer dazu senkrechten Richtung elastisch ausgebildet sind/ist.

8. Antriebseinrichtung nach einem der Ansprüche 6 oder 7, **dadurch gekennzeichnet, daß** das starre Element zwei Streben (18) aufweist, die nebeneinander angeordnet sind, wobei zwischen den Streben (18) das dritte Federelement (22) befestigt ist und an den beiden freien Enden der Streben (18) das erste Federelement (20) und das zweite Federelement (21) befestigt sind.

9. Antriebseinrichtung nach Anspruch 8, **dadurch gekennzeichnet, daß** die Streben (18) U-förmig ausgebildet sind.

10. Antriebseinrichtung nach einem der vorhergehenden Ansprüche, **dadurch gekennzeichnet, daß** das Koppelelement (17) schwenkbar aufgehängt ist.

11. Antriebseinrichtung nach Anspruch 10, **dadurch gekennzeichnet, daß** die Schwenkachse senkrecht zur Bewegungsrichtung der beiden Antriebskomponenten (1, 2) orientiert ist

12. Antriebseinrichtung nach einem der Ansprüche 2 bis 11, **dadurch gekennzeichnet, daß** die Schwenkachse mittig zwischen der Befestigung des Koppelelements (17) an der ersten Antriebskomponente (1) und der Befestigung des Koppelelements (17) an der zweiten Antriebskomponente (2) angeordnet ist.

13. Antriebseinrichtung nach einem der Ansprüche 10 bis 12, **dadurch gekennzeichnet, daß** die Aufhängung des Koppelelements (17) spielfrei ausgebildet ist.

14. Antriebseinrichtung nach einem der Ansprüche 6 bis 13, **dadurch gekennzeichnet, daß** ein viertes Federelement (25) an dem Gestell (23) und am Koppelelement (17) befestigt ist.

15. Antriebseinrichtung nach Anspruch 14, **dadurch gekennzeichnet, daß** das vierte Federelement (25) in einer Richtung parallel zur Bewegungsrichtung der beiden Antriebskomponenten (1, 2) elastisch und in einer dazu senkrechten Richtung starr ausgebildet ist.

16. Antriebseinrichtung nach einem der vorhergehenden Ansprüche, **dadurch gekennzeichnet, daß** die beiden Antriebskomponenten (1, 2) über wenigstens ein fünftes Federelement (10), das in einer Richtung parallel zur Bewegungsrichtung der beiden Antriebskomponenten (1, 2) elastisch ausgebildet ist, miteinander verbunden sind.

17. Antriebseinrichtung nach Anspruch 16, **dadurch gekennzeichnet, daß** mehrere fünfte Federelemente (10) stapelförmig übereinander angeordnet sind.

18. Antriebseinrichtung nach einem der vorhergehenden Ansprüche, **dadurch gekennzeichnet, daß** die Antriebseinrichtung wenigstens ein sechstes Federelement (13), das in einer Richtung parallel zur Bewegungsrichtung der beiden Antriebskomponenten (1, 2) elastisch ausgebildet ist, zur Befestigung am elektrischen Kleingerät aufweist.

19. Antriebseinrichtung nach einem der Ansprüche 3 bis 18, **dadurch gekennzeichnet, daß** das erste Federelement (20), das zweite Federelement (21), das dritte Federelement (22), das vierte Federelement (25), das fünfte Federelement (10) und/oder das sechste Federelement (13) als Blattfeder ausgebildet sind.

20. Antriebseinrichtung nach einem der vorhergehenden Ansprüche, **dadurch gekennzeichnet, daß** wenigstens eine der beiden Antriebskomponenten (1, 2) wenigsten einen Dauermagneten (6) aufweist.

21. Antriebseinrichtung nach einem der vorhergehenden Ansprüche, **dadurch gekennzeichnet, daß** wenigstens eine der beiden Antriebskomponenten (1, 2) einen Wickelkern (3) aufweist, auf dem mindestens eine Spule (4) angeordnet ist.

22. Antriebseinrichtung nach einem der vorhergehenden Ansprüche, **dadurch gekennzeichnet, daß** sich im Betriebszustand der Antriebseinrichtung die Schwerpunkte der ersten Antriebskomponente (1) inklusive sich mitbewegender Bauteile und der zweiten Antriebskomponente (2) inklusive sich mitbewegender Bauteile auf einer gemeinsamen Linie, insbesondere einer gemeinsamen Geraden, bewegen.

23. Antriebseinrichtung nach Anspruch 22, **dadurch gekennzeichnet, daß** diese Linie bzw. Gerade in der gemeinsamen Bewegungsebene (x-z Ebene) der beiden Antriebskomponenten (1,2) liegt.

24. Antriebseinrichtung nach Anspruch 22 oder 23, **dadurch gekennzeichnet, daß** die Schwenkachse des Koppelelements (17) die Linie bzw. die Gerade kreuzt.

25. Antriebseinrichtung nach einem der vorhergehenden Ansprüche, **dadurch gekennzeichnet, daß** im Betriebszustand der Antriebseinrichtung die linearen Impulse der ersten Antriebskomponente (1) inklusive sich mitbewegender Bauteile und der zweiten Antriebskomponente (2) inklusive sich mitbewegender Bauteile entgegengesetzt gleich sind.

26. Elektrisches Kleingerät mit wenigstens einer oszillierenden Arbeitseinheit, **dadurch gekennzeichnet, daß** das Kleingerät eine Antriebseinheit nach einem der vorhergehenden Ansprüche aufweist.

27. Kleingerät nach Anspruch 26, **dadurch gekennzeichnet, daß** das Gestell (23) am Kleingerät befestigt ist.

28. Kleingerät nach einem der Ansprüche 26 oder 27, **dadurch gekennzeichnet, daß** das Kleingerät eine selbstlernende Elektronik zur Ansteuerung der Antriebseinheit unter Resonanzbedingungen aufweist.

## Claims

1. A drive mechanism for generating an oscillatory motion of at least one working unit (9) of a small electric appliance, with a coil (4) for producing a magnetic field that extends from a first drive component (1) and acts on a second drive component (2) that is movably arranged in the small electric appliance in such a way that the second drive component (2) is set in an oscillatory motion, wherein the first drive component (1) is movably arranged in the small electric appliance in order to execute an oscillatory motion opposite in phase to the second drive component (2), **characterized in that** the drive mechanism has a coupling element (17) by means of which there is formed between the two drive components (1, 2) a rigid coupling in a direction parallel to the direction of movement of the two drive components (1, 2) and a flexible coupling in a direction perpendicular thereto.

2. The drive mechanism as claimed in claim 1, **characterized in that** the coupling element (17) is fastened to the two drive components (1, 2) without play.

3. The drive mechanism as claimed in any one of the preceding claims, **characterized in that** the coupling element (17) has one rigid element (18) and a first spring element (20).

4. The drive mechanism as claimed in claim 3, **characterized in that** the first spring element (20) is fastened to the rigid element (18) and to one of the two drive components (1, 2).

5. The drive mechanism as claimed in claim 4, **characterized in that** the coupling element (17) has a second spring element (21) which is fastened to the rigid element (18) and to the other drive component (1, 2).

6. The drive mechanism as claimed in any one of the claims 3 to 5, **characterized in that** the coupling element (17) has a third spring element (22) which is fastened to the rigid element (18) and to a frame (23).

7. The drive mechanism as claimed in any one of the claims 3 to 6, **characterized in that** the first spring element (20) and/or the second spring element (21) and/or the third spring element (22) is/are rigidly constructed in a direction parallel to the direction of movement of the two drive components (1, 2) and elastically constructed in a direction perpendicular thereto.

8. The drive mechanism as claimed in any one of the claims 6 or 7, **characterized in that** the rigid element has two struts (18) arranged side by side, with the third spring element (22) being fastened between the struts (18), and the first spring element (20) and the second spring element (21) being fastened to the two free ends of the struts (18).

9. The drive mechanism as claimed in claim 8, **characterized in that** the struts (18) are of a U-shaped configuration.

10. The drive mechanism as claimed in any one of the preceding claims, **characterized in that** the coupling element (17) is pivotally suspended.

11. The drive mechanism as claimed in claim 10, **characterized in that** the pivot axis is orientated perpendicular to the direction of movement of the two drive components (1, 2).

12. The drive mechanism as claimed in any one of the claims 2 to 11, **characterized in that** the pivot axis is arranged centrally between the point of attachment of the coupling element (17) to the first drive component (1) and the point of attachment of the coupling element (17) to the second drive component (2).

13. The drive mechanism as claimed in any one of the claims 10 to 12, **characterized in that** the suspension of the coupling element (17) is of play-free construction.

14. The drive mechanism as claimed in any one of the claims 6 to 13, **characterized in that** a fourth spring element (25) is fastened to the frame (23) and to the coupling element (17).

15. The drive mechanism as claimed in claim 14, **characterized in that** the fourth spring element (25) is elastically constructed in a direction parallel to the direction of movement of the two drive components (1, 2) and rigidly constructed in a direction perpendicular thereto.

16. The drive mechanism as claimed in any one of the preceding claims, **characterized in that** the two drive components (1, 2) are interconnected by at least one fifth spring element (10) which is elastically constructed in a direction parallel to the direction of movement of the two drive components (1, 2).

17. The drive mechanism as claimed in claim 16, **characterized in that** several fifth spring elements (10) are arranged in stack form one above the other.

18. The drive mechanism as claimed in any one of the preceding claims, **characterized in that**, for fastening to the small electric appliance, the drive mechanism has at least one sixth spring element (13) which is elastically constructed in a direction parallel to the direction of movement of the two drive components (1, 2).

19. The drive mechanism as claimed in any one of the claims 3 to 18, **characterized in that** the first spring element (20), the second spring element (21), the third spring element (22), the fourth spring element (25), the fifth spring element (10) and/or the sixth spring element (13) are constructed as leaf springs.

20. The drive mechanism as claimed in any one of the preceding claims, **characterized in that** at least one of the two drive components (1, 2) has at least one permanent magnet (6).

21. The drive mechanism as claimed in any one of the preceding claims, **characterized in that** at least one of the two drive components (1, 2) has a core (3) around which at least one coil (4) is wound.

22. The drive mechanism as claimed in any one of the preceding claims, **characterized in that** in the operating state of the drive mechanism the centers of gravity of the first drive component (1), including co-moving parts, and of the second drive component (2), including co-moving parts, move on a common line, particularly a common straight line.

23. The drive mechanism as claimed in claim 22, **characterized in that** said line or straight line lies in the common plane of motion (x-z plane) of the two drive components (1, 2).

24. The drive mechanism as claimed in claim 22 or 23, **characterized in that** the pivot axis of the coupling element (17) intersects said line or straight line.

25. The drive mechanism as claimed in any one of the preceding claims, **characterized in that** in the operating state of the drive mechanism the linear momentums of the first drive component (1), including co-moving parts, and of the second drive component (2), including co-moving parts, are opposite and equal.

26. A small electric appliance with at least one oscillating working unit, **characterized in that** the small appliance includes a drive unit in accordance with any one of the preceding claims.

27. The small appliance as claimed in claim 26, **characterized in that** the frame (23) is fastened to the small appliance.

28. The small appliance as claimed in any one of the claims 26 or 27, **characterized in that** the small appliance has a self-learning electronic unit for controlling the drive unit under resonant conditions.

## Revendications

1. Dispositif d'entraînement pour produire un mouvement oscillant d'au moins une unité de travail (9) d'un petit appareil électrique, comprenant une bobine (4) destinée à engendrer un champ magnétique qui est issu d'un premier composant d'entraînement (1) et agit sur un second composant d'entraînement (2) agencé mobile dans le petit appareil électrique, de façon telle que le second composant d'entraînement (2) soit mis en mouvement selon un mouvement d'oscillation, le premier composant d'entraînement (1) étant disposé mobile dans le petit appareil électrique en vue d'effectuer un mouvement oscillant en opposition de phase par rapport au second composant d'entraînement,
**caractérisé en ce que** le dispositif d'entraînement présente un élément de couplage (17) qui réalise un couplage rigide dans une direction parallèle à la direction de mouvement des deux composants d'entraînement (1, 2), et, dans une direction perpendiculaire à celle-ci, un couplage élastique entre les deux composants d'entraînement (1, 2).

2. Dispositif d'entraînement selon la revendication 1, **caractérisé en ce que** l'élément de couplage (17) est fixé sans jeu aux deux composants d'entraînement (1, 2).

3. Dispositif d'entraînement selon l'une des revendications précédentes, **caractérisé en ce que** l'élément de couplage (17) comprend un élément rigide (18) et un premier élément de ressort (20).

4. Dispositif d'entraînement selon la revendication 3, **caractérisé en ce que** le premier élément de ressort (20) est fixé à l'élément rigide (18) et à l'un des deux composants d'entraînement (1, 2).

5. Dispositif d'entraînement selon la revendication 4, **caractérisé en ce que** l'élément de couplage (17) comprend un deuxième élément de ressort (21) qui est fixé à l'élément rigide (18) et à l'autre composant d'entraînement (1, 2).

6. Dispositif d'entraînement selon l'une des revendications 3 à 5, **caractérisé en ce que** l'élément de couplage (17) comprend un troisième élément de ressort (22) qui est fixé à l'élément rigide (18) et à un châssis (23).

7. Dispositif d'entraînement selon l'une des revendications 3 à 6, **caractérisé en ce que** le premier élément de ressort (20) et/ou le deuxième élément de ressort (21) et/ou le troisième élément de ressort (22) est/sont réalisé(s) rigide(s) dans une direction parallèle à la direction de mouvement des deux composants d'entraînement (1, 2), et élastique(s) dans une direction perpendiculaire à celle-ci.

8. Dispositif d'entraînement selon l'une des revendications 6 ou 7, **caractérisé en ce que** l'élément rigide présente deux entretoises (18) qui sont disposées l'une à côté de l'autre, le troisième élément de ressort (22) étant fixé entre les entretoises (18), et le premier élément de ressort (20) et le deuxième élément de ressort (21) étant fixés aux deux extrémités libres des entretoises (18).

9. Dispositif d'entraînement selon la revendication 8, **caractérisé en ce que** les entretoises (18) sont d'une configuration en forme de U.

10. Dispositif d'entraînement selon l'une des revendications précédentes, **caractérisé en ce que** l'élément de couplage (17) est suspendu de manière pivotante.

11. Dispositif d'entraînement selon la revendication 10, **caractérisé en ce que** l'axe de pivotement est orienté perpendiculairement à la direction de mouvement des deux composants d'entraînement (1, 2).

12. Dispositif d'entraînement selon l'une des revendications 2 à 11, **caractérisé en ce que** l'axe de pivotement est disposé de manière centrale entre la fixation de l'élément de couplage (17) au premier élément d'entraînement (1) et la fixation de l'élément de couplage (17) au second composant d'entraînement (2).

13. Dispositif d'entraînement selon l'une des revendications 10 à 12, **caractérisé en ce que** la suspension de l'élément de couplage (17) est réalisée sans jeu.

14. Dispositif d'entraînement selon l'une des revendications 6 à 13, **caractérisé en ce qu'**un quatrième élément de ressort (25) est fixé au châssis (23) et à l'élément de couplage (17).

15. Dispositif d'entraînement selon la revendication 14, **caractérisé en ce que** le quatrième élément de ressort (25) est réalisé élastique dans une direction parallèle à la direction de mouvement des deux composants d'entraînement (1, 2), et rigide dans une direction perpendiculaire à celle-ci.

16. Dispositif d'entraînement selon l'une des revendications précédentes, **caractérisé en ce que** les deux composants d'entraînement (1, 2) sont reliés par l'intermédiaire d'au moins un cinquième élément de ressort (10) qui est réalisé élastique dans une direction parallèle à la direction de mouvement des deux composants d'entraînement (1, 2).

17. Dispositif d'entraînement selon la revendication 16, **caractérisé en ce que** plusieurs cinquièmes éléments de ressort (10) sont disposés les uns sur les autres de manière empilée.

18. Dispositif d'entraînement selon l'une des revendications précédentes, **caractérisé en ce que** le dispositif d'entraînement comprend au moins un sixième élément de ressort (13), qui est réalisé élastique dans une direction parallèle à la direction de mouvement des deux composants d'entraînement (1, 2), pour la fixation au petit appareil électrique.

19. Dispositif d'entraînement selon l'une des revendications 3 à 18, **caractérisé en ce que** le premier élément de ressort (20), le deuxième élément de ressort (21), le troisième élément de ressort (22), le quatrième élément de ressort (25), le cinquième élément de ressort (10) et/ou le sixième élément de ressort (13) sont réalisés en tant que ressort à lame.

20. Dispositif d'entraînement selon l'une des revendications précédentes, **caractérisé en ce que** l'un au moins des deux composants d'entraînement (1, 2) comprend au moins un aimant permanent (6).

21. Dispositif d'entraînement selon l'une des revendications précédentes, **caractérisé en ce que** l'un au moins des deux composants d'entraînement (1, 2) présente un noyau d'enroulement (3) sur lequel est disposée au moins une bobine (4).

22. Dispositif d'entraînement selon l'une des revendications précédentes, **caractérisé en ce que** dans l'état de fonctionnement, les centres de gravité du premier composant d'entraînement (1) y compris les pièces mobiles avec celui-ci, et du second composant d'entraînement (2) y compris les pièces mobiles avec ce dernier, se déplacent sur une ligne commune, notamment une droite commune.

23. Dispositif d'entraînement selon la revendication 22, **caractérisé en ce que** cette ligne ou cette droite se situe dans le plan de mouvement commun (plan x-z) des deux composants d'entraînement (1, 2).

24. Dispositif d'entraînement selon la revendication 22 ou 23, **caractérisé en ce que** l'axe de pivotement de l'élément de couplage (17) croise ladite ligne ou ladite droite.

25. Dispositif d'entraînement selon l'une des revendications précédentes, **caractérisé en ce que** dans l'état de fonctionnement du dispositif d'entraînement, les impulsions linéaires du premier composant d'entraînement (1) y compris les pièces mobiles avec celui-ci, et du second composant d'entraînement (2) y compris les pièces mobiles avec ce dernier, sont identiques et opposées.

26. Petit appareil électrique comprenant au moins une unité d'entraînement oscillante, **caractérisé en ce que** le petit appareil comprend une unité d'entraînement selon l'une des revendications précédentes.

27. Petit appareil selon la revendication 26, **caractérisé en ce que** le châssis (23) est fixé au petit appareil.

28. Petit appareil selon la revendication 26 ou 27, **caractérisé en ce que** le petit appareil comprend une électronique à auto-apprentissage pour la commande de l'unité d'entraînement dans des conditions de résonance.
